# EUROPÄISCHE PATENTSCHRIFT

(11) **EP 3 566 261 B1**
(45) Veröffentlichungstag und Bekanntmachung des Hinweises auf die Patenterteilung: **25.03.2020**
(21) Anmeldenummer: 17808871.2
(22) Anmeldetag: 01.12.2017
(51) Int. Cl.: H01Q 1/22, H01Q 1/32, H04B 1/08, H04B 1/3822, H01Q 1/38, H01Q 21/28

(54) **WANDLERVORRICHTUNG ZUR ANPASSUNG EINER ANTENNENIMPEDANZ MIT GEHÄUSE FÜR EIN KRAFTFAHRZEUG UND KRAFTFAHRZEUG MIT EINGEBAUTER WANDLERVORRICHTUNG**
CONVERTER DEVICE FOR ADAPTING AN ANTENNA IMPEDANCE, COMPRISING A HOUSING FOR A MOTOR VEHICLE, AND MOTOR VEHICLE WITH CONVERTER DEVICE INSTALLED THEREIN
CONVERTISSEUR PERMETTANT D'ADAPTER UNE IMPÉDANCE D'ANTENNE AU BOÎTIER D'UN VÉHICULE ET VÉHICULE AVEC CONVERTISSEUR INTÉGRÉ

(30) Priorität: 20.04.2017 DE 102017206632
(43) Veröffentlichungstag der Anmeldung: 13.11.2019
(73) Patentinhaber: Audi AG, 85045 Ingolstadt (DE)
(72) Erfinder: CENANOVIC, Amir, 85120 Hepberg (DE); REICHARDT, Lars, 85139 Wettstetten (DE); GRASSL, Stefan, 86558 Hohenwart (DE)
(86) Internationale Anmeldenummer: PCT/EP2017/081089
(87) Internationale Veröffentlichungsnummer: WO 2018/192673

(56) Entgegenhaltungen:
- DE-A1-102009 014 242
- US-A1- 2017 054 204
- US-B1- 8 554 154

## Beschreibung

Die Erfindung betrifft eine Wandlervorrichtung zur Anpassung einer Impedanz und/oder eines Signalpegels, zumindest einer Antenne eines Kraftfahrzeugs, wobei die Antenne des Kraftfahrzeugs zum Empfang eines Radio- und/oder Rundfunksignals ausgestaltet ist, und ein Kraftfahrzeug mit einer eingebauten Wandlervorrichtung.

Aus der DE 10 2009 014 242 A1 ist eine Folienantenne in tragbaren elektronischen Geräten bekannt. Die zumindest eine flächig mit einem Träger ausgebildete Antenne ist in einem Gehäuse integriert, wobei auf dem Träger oder in direkter Nachbarschaft dazu ein Impedanzwandler angeordnet ist, der über eine elektrische Verbindung mit der Antenne kontaktiert ist. Der Impedanzwandler ist dabei ausgestaltet, eine elektrische Impedanz der integrierten Antenne zu wandeln.

Aus der DE 103 21 247 A1 ist ein verlustarmes Sendemodul bekannt. Das Sendemodul umfasst einen eingangsseitig angeordneten Leistungsverstärker, ein ausgangsseitig angeordnetes Tiefpassfilter und einen dazwischen angeordneten Impedanzwandler. Die Integration der genannten Komponenten bewirkt eine Impedanzanpassung zwischen dem niederohmigen Verstärkerausgang und dem Ausgang des Sendemoduls mit einer vorgegebenen Ausgangsimpedanz, wobei die Impedanzanpassung stufenweise durchführbar ist. Nachteilig an dem Sendemodul ist, dass keine Antenne integriert ist.

Aus der EP 3 096 401 A1 ist eine Antennenstruktur bekannt, die eine dielektrische Fläche aufweist und je ein Strahlungselement auf beiden Seiten der elektrischen Fläche. Die beiden Strahlungselemente sind dabei mittels Durchkontaktierungen galvanisch miteinander verbunden. Ein planarer Impedanzwandler ist auf einer Seite der Fläche angebracht. Der Impedanzwandler ist dabei nahe an dem zumindest einen Strahlungselement angebracht. Es kann auch eines der Strahlungselemente selbst als Impedanzwandler ausgeführt sein. Der Impedanzwandler ist also zur Impedanzwandlung zumindest eines zugehörigen Strahlungselementes bereitgestellt.

In der US 2017/054204 A1 ist ein Dachantennenmodul beschrieben, in welchem eine Antennenschaltung bereitgestellt ist, die sowohl Anschlüsse für externe Antennen als auch interne Antennen aufweist.

Nachteilig an den bekannten Ausführungsformen ist, dass entweder eine Antenne nicht in dasselbe Gehäuse des Impedanzwandlers integriert ist und damit viel Bauraum benötigt oder der Impedanzwandler allein für eine Impedanzwandlung einer bestimmten, in das Gehäuse integrierten Antenne ausgestaltet ist.

Erfindungsgemäße Aufgabe ist es, eine platzsparende und kostengünstige integrierte Lösung für eine Wandlervorrichtung, die die Funktion eines Impedanzwandlers und/oder eines Verstärkers beinhaltet, und zumindest eine Antenne bereitzustellen, ohne die Flexibilität bei der Antennenwahl zu verlieren.

Die erfindungsgemäße Aufgabe wird gelöst gemäß der unabhängigen Patentansprüche. Vorteilhafte Weiterbildungen sind durch die abhängigen Patentansprüche, die folgende Beschreibung und die Figuren beschrieben.

Als eine Lösung stellt die Erfindung eine Wandlervorrichtung bereit, der in einem Gehäuse angebracht ist, welches in ein Kraftfahrzeug eingebaut werden kann. Die Wandlervorrichtung stellt eine Funktion eines Impedanzwandlers und/oder eines Verstärkers bereit, ist also dazu ausgestaltet, eine Impedanz anzupassen oder zu wandeln, und/oder eine Spannung zu wandeln, d.h. eine Spannungsverstärkung durchzuführen. Die Wandlervorrichtung stellt zumindest einen elektrischen Eingang und zumindest einen elektrischen Ausgang an dem Gehäuse zur Verfügung. Je ein elektrischer Eingang und ein elektrischer Ausgang sind über zumindest einen Wandlungspfad innerhalb des Gehäuses miteinander verbunden. Der Wandlungspfad stellt die technische Funktionalität der Wandlervorrichtung dar. Über die Funktion der Wandlung einer Impedanz hinaus kann der Wandlungspfad auch einen Verstärker oder ausschließlich einen Verstärker beinhalten, der das Signal verstärkt. Das bedeutet, dass über den Wandlungspfad, der somit auch einen Verstärkerpfad darstellen kann der Einfachheit halber im Folgenden aber stets als Wandlungspfad bezeichnet ist, eine Signalverstärkung stattfindet und/oder eine Impedanz einer gehäuseexternen Antenne, die am elektrischen Eingang angeschlossen werden kann, so gewandelt wird, dass am korrespondierenden elektrischen Ausgang, der im Folgenden als Wandlerausgang bezeichnet ist, eine vorbestimmte Impedanz bereitgestellt ist. Die vorbestimmte Impedanz liegt insbesondere in einem Bereich von 20 Ohm bis 120 Ohm. Eine vorbestimmte Impedanz kann zum Beispiel ein Wert von 50 Ohm sein, wenn am elektrischen Ausgang ein Leitungskabel mit einer Impedanz von 50 Ohm angeschlossen werden soll. Die Wandlervorrichtung führt somit zu einer Verstärkung und/oder Impedanzanpassung zwischen der angeschlossenen Antenne und dem angeschlossenen Leitungskabel. Die Wandlervorrichtung kann auch so ausgestaltet sein, dass eine Impedanz einer angeschlossenen Antenne bereits im Wandlungspfad an ein vorhandenes elektronisches Gerät innerhalb des Wandlungspfads angepasst ist. Das bedeutet, dass auch verschiedene vorbestimmte Impedanzen im Wandlungspfad der Wandlervorrichtung bereitgestellt sein können. An den elektrischen Eingang der Wandlervorrichtung kann eine Antenne angeschlossen werden, die zum Empfang von elektromagnetischen Wellen ausgestaltet ist. Insbesondere ist diese Antenne eine Rundfunkantenne, die für die Rundfunkdienste AM und/oder FM und/oder TV und/oder DAB ausgestaltet ist.

Über die Antenne kann somit ein Radiosignal oder ein Fernsehsignal empfangen werden. Die Antenne ist bevorzugt als eine elektrisch leitfähige Struktur auf einer Fahrzeugscheibe des Kraftfahrzeugs ausgebildet.

Die Erfindung sieht vor, dass in dem Gehäuse der Wandlervorrichtung zusätzlich eine Antennenvorrichtung integriert ist. Diese Antennenvorrichtung ist unabhängig vom Wandlungspfad. Das bedeutet, dass die Funktion der Wandlervorrichtung die integrierte Antennenvorrichtung unbeeinflusst lässt. Es wird also von der Wandlervorrichtung eine Impedanz einer externen Antenne angepasst und das Rundfunksignal verstärkt, aber nicht eine Impedanz der integrierten Antennenvorrichtung. Die Antennenvorrichtung ist an einem Platz innerhalb des Gehäuses positioniert, der nicht von ursprünglichen Komponenten der Wandlervorrichtung besetzt ist. Die Antennenvorrichtung stellt dabei zumindest einen Teil von Komponenten für eine Funkverbindung z.B. eines sogenannten Connect-Dienstes zur Verfügung, über den das Kraftfahrzeug bei eingebauter Wandlervorrichtung eine Funkverbindung aufbauen kann. Ein Connect-Dienst ist z.B. eine Bluetooth- und/oder Bluetooth-Low-Energy und/oder WLAN-Verbindung. Das bedeutet, dass die in der Antennenvorrichtung vorhandenen Komponenten zumindest zu einem Aufbau einer Funkverbindung zur Datenübertragung über kurze Distanz gemäß einem Standard der IEEE 802.15-Familie (z.B. Bluetooth/Bluetooth-Low-Energy - 802.15.1) und/oder zum Aufbau einer Funkverbindung zur Datenübertragung gemäß einem Standard der IEEE 802.11-Familie (z.B. WLANac-802.11ac, WLANn-802.11n) beitragen. In so einem Fall kann die Antennenvorrichtung beispielsweise aus einer einfachen Antenne mit einem Antennenanschluss bestehen. Die Antennenvorrichtung kann aber auch die gesamte vorher genannte und spezifizierte Bluetooth- und/oder WLAN-Verbindung zur Verfügung stellen, beispielsweise dann, wenn die Antennenvorrichtung zusätzlich zu einer Antenne weitere aktive elektronische Bauelemente zumindest eines Bluetooth- und/oder WLAN-Moduls aufweist. Über die in das Gehäuse der Wandlervorrichtung integrierte Antennenvorrichtung kann also eine Verbindung zu zumindest einem Bluetooth- und/oder WLAN-fähigen Gerät bereitgestellt werden, wenn sich ein solches Gerät innerhalb einer vorhergesehenen Reichweite der Antennenvorrichtung befindet. Die Antennenvorrichtung ist elektrisch mit zumindest einem Ausgang der Wandlervorrichtung verbunden, wobei dieser Ausgang das Anschließen eines elektrischen Kabels und/oder einer elektrischen Leitung von außerhalb des Gehäuses an die Antennenvorrichtung ermöglicht. Über ein angeschlossenes Kabel kann ein Signal, das von der Antennenvorrichtung empfangen wird, weitergeleitet werden, oder ein Signal, das von der Antennenvorrichtung gesendet werden soll, eingespeist werden. Der Ausgang, der mit der Antennenvorrichtung elektrisch verbunden ist, ist als Antennenvorrichtungsanschluss bezeichnet.

Die Erfindung bietet den Vorteil, dass in der Wandlervorrichtung zusätzlich zu der Funktion einer Impedanzanpassung und/oder Signalverstärkung eine davon unabhängige Bluetooth- und/oder WLAN-Funktion bereitgestellt ist. Daraus ergibt sich eine Platzersparnis, da kein zusätzliches Gehäuse für eine Bluetooth- und/oder WLAN-Funktion benötigt ist, das in das Kraftfahrzeug eingebaut werden müsste. Es ergeben sich ebenso Kosteneinsparungen, da kein zusätzliches Gehäuse gefertigt werden muss und bei einem Einbau in ein Kraftfahrzeug allein ein einziges Gehäuse eingebaut und angeschlossen werden muss. Die Erfindung trägt somit dazu bei, eine Montage eines Kraftfahrzeugs schneller und günstiger zu machen. Die Antennenvorrichtung ist dazu beispielsweise auf einer von der Wandlervorrichtung ungenutzten Stelle einer Platine im oder am Gehäuse der Wandlervorrichtung angebracht oder auf einer zusätzlichen Platine im Gehäuse der Wandlervorrichtung angebracht.

Erfindungsgemäß ist vorgesehen, dass zumindest ein Wandlerausgang und zumindest ein Antennenvorrichtungsanschluss in einem gemeinsamen Steckverbindungselement ausgeführt sind. Mit anderen Worten sind ein elektrisches Signal der Wandlervorrichtung und ein elektrisches Signal der Antennenvorrichtung gemeinsam an einem Steckverbindungselement der Wandlervorrichtung verfügbar. Ein Steckverbindungselement umfasst einen elektrisch leitfähigen Pin, an den ein elektrisches Kabel angeschlossen werden kann. Mit diesem einen elektrischen Pin können sowohl der Wandlungspfad, als auch die Antennenvorrichtung elektrisch verbunden sein. Die Realisierung des Anschlusses durch ein einziges Steckverbindungselement bietet den Vorteil, dass das Gehäuse kompakter gebaut werden kann. Es bietet sich also der Vorteil einer weiteren Platzersparnis. Es können insbesondere auch mehrere Antennenvorrichtungen und/oder mehrere Wandlungspfade elektrisch mit einem einzelnen Steckverbindungselement verbunden sein. Es ist genauso möglich, dass zusätzlich oder alternativ weitere Steckverbindungselemente von der Wandlervorrichtung bereitgestellt sind, die als Anschlüsse dienen. So ist es möglich, dass je eine Antennenvorrichtung und/oder je ein Wandlungspfad an ein eigenes Steckverbindungselement angeschlossen sind. Genauso können je mehrere Antennenvorrichtungen und/oder Wandlungspfade gruppiert an je ein Steckverbindungselement angeschlossen sein. Der Vorteil dabei ist, dass verschiedene elektrische Signale an je einem Ausgang des Gehäuses der Wandlervorrichtung verfügbar sind, insbesondere jeder Ausgang nur ein Signal eines einzelnen Funkdienstes bereitstellt. Somit ist es nicht nötig in einem nachgeschalteten elektronischen Gerät mehrere Signale, die auf einer gemeinsamen Leitung geführt sind, wieder zu trennen, beispielsweise mittels Frequenzfiltern.

Eine Weiterbildung der Erfindung sieht vor, dass der zumindest eine Wandlerausgang und der zumindest eine Antennenvorrichtungsanschluss der Wandlervorrichtung als Koaxialverbindungselement ausgeführt ist. Das bedeutet, dass an das Gehäuse der Wandlervorrichtung zumindest ein Koaxialkabel anschließbar ist, über das ein Signal der Antennenvorrichtung und/oder des Wandlungspfads, also der externen Rundfunkantenne, verfügbar ist. Es können auch mehrere Koaxialverbindungselemente an der Wandlervorrichtung vorhanden sein, beispielsweise wenn Signale der Antennenvorrichtung und/oder des Wandlungspfad in getrennten Anschlüssen bereitgestellt sind. Das zumindest eine Koaxialverbindungselement verfügt dabei über ein Sicherungselement. Dieses Sicherungselement ist dazu ausgestaltet, ein anschließbares Verbindungselement mechanisch zu sichern. Dadurch ist gewährleistet, dass sich insbesondere ein angeschlossenes Kabel beispielsweise bei Vibrationen und/oder Stößen nicht lockern oder von der Wandlervorrichtung lösen kann. Wenn am Gehäuse mehrere Koaxialstecker und/oder Koaxialbuchsen angebracht sind, können an diese je einzelne Kabel und/oder ein gemeinsamer Kabelverbund angeschlossen werden. Der Vorteil eines gemeinsamen Kabelverbundes ist, dass ein falsches Anschließen einzelner Kabel vermieden wird, und das ein einziges Sicherungselement an einem gemeinsamen Steckverbindungselement ausreicht, um die mechanische Sicherung zu gewährleisten. Im Fall einzelner Kabel ist pro Kabel oder pro Steckverbindungselement je ein Sicherungselement bereitgestellt. Ein Sicherungselement ist zum Beispiel ein Verklippselement, das je zwei zusammengehörige Steckverbindungselemente mechanisch durch einen Klippsmechanismus miteinander verbindet.

Eine Weiterbildung der erfindungsgemäßen Wandlervorrichtung sieht vor, dass eine Komponente der Antennenvorrichtung eine elektrisch leitfähige Struktur ist. Durch diese elektrisch leitfähige Struktur ist eine Antenne ausgebildet. Dabei kann diese Antenne planar sein, z.B. eine Patchantenne oder ein Monopol, das bedeutet sie ist formmäßig eben oder als eine Fläche oder Platte oder Schicht ausgestaltet. Diese Ausgestaltung bietet den Vorteil, dass eine solche Antenne auf einem vorhandenen Trägersubstrat der Wandlervorrichtung positioniert werden kann. Eine planare Antenne benötigt insbesondere wenig Bauraum, sodass sie in ein bestehendes Gehäuse einer Wandlervorrichtung eingebaut werden kann. Das bedeutet, dass insbesondere keine Änderungen an einer Baugröße eines Gehäuses einer Wandlervorrichtung vorgenommen werden müssen. Eine solche Antenne kann auch zum Beispiel eine Patchantenne sein oder eine Planar-Inverted-F-Shaped Antenne, kurz PIFA Antenne, sein. Die PIFA-Antenne kann als kostengünstiges Blechbiegeteil ausgestaltet sein. Diese Ausgestaltung bietet den Vorteil, dass eine solche Antenne auf einem vorhandenen Trägersubstrat der Wandlervorrichtung nur Anbindungspunkte für das hochfrequente Signal und die Masse bedarf. Somit kann Fläche auf der Platine der Wandlervorrichtung eingespart werden. Eine solche Antenne kann auch eine resonante Struktur am Gehäuse der Wandlervorrichtung selbst sein, die über geeignete Kopplung zur Resonanz angeregt wird. Auch ein Teil des Gehäuses kann als resonante Struktur bereitgestellt sein.

Eine Weiterbildung der Erfindung sieht vor, dass die Wandlervorrichtung zumindest einen Vorverstärker und/oder Transceiver aufweist, der je ein Teil einer Komponente der Antennenvorrichtung ist. Der Vorverstärker und/oder Transceiver befindet sich dabei zwischen einer Antenne der Antennenvorrichtung und dem Antennenvorrichtungsanschluss. Der Vorverstärker und/oder Transceiver sind dabei je in das Gehäuse der Wandlervorrichtung integriert, sowie alle Komponenten der Antennenvorrichtung. Ein Transceiver ist dabei ein Bauteil, das ein elektrisches Funksignal sowohl über die Antenne der Antennenvorrichtung empfangen, senden, als auch in zum Beispiel digitale Signale wandeln kann. Der Vorteil dieser Weiterbildung ist, dass insbesondere durch einen im Transceiver integrierten Vorverstärker und/oder einen separaten Vorverstärker ein schwaches von der Antenne der Antennenvorrichtung empfangenes Signal vorverstärkt werden kann, bevor weitere Übertragungsverluste eine Signalstärke des schwachen empfangenen Signals weiter beeinträchtigen. Dadurch ist die Antennenvorrichtung dazu geeignet, auch schwache Funksignale zu empfangen. Der Vorteil dieser Weiterbildung ist, dass insbesondere durch einen Vorverstärker ein über die Antenne der Antennenvorrichtung abgestrahltes Signal vorverstärkt werden kann und die Datenübertragungsqualität verbessert und/oder die Reichweite des lokalen Funknetzes vergrößert werden kann. Die Spannungs- und/oder Stromversorgung für die aktiven elektronischen Komponenten kann zum Beispiel über die Koaxialleiteranschlüsse der Wandlervorrichtung erfolgen. Für das digital gewandelte Signal des Transceivers kann eine Schnittstelle an der Wandlervorrichtung bereitgestellt sein. Die Integration weiterer Komponenten der Antennenvorrichtung in das Gehäuse der Wandlervorrichtung führt außerdem wiederum zur Platzersparnis und Kostenreduzierung, da dadurch weitere zusätzliche Gehäuse eingespart werden können.

Eine Weiterbildung der Erfindung sieht vor, dass durch eine geeignete Positionierung der Antennenvorrichtung im Gehäuse der Wandlervorrichtung die Funktion der Wandlervorrichtung von der Antennenvorrichtung unbeeinflusst ist. Das geschieht dadurch, dass beispielsweise eine Hauptabstrahlrichtung, also ein Abstrahlmaximum, der Antennenvorrichtung nicht auf Bauelemente der Wandlervorrichtung gerichtet ist, also von diesen weg oder an diesen vorbei weist. Das hat den Vorteil, dass die Antennenvorrichtung eine zusätzliche Funktionalität in der Wandlervorrichtung bereitstellt, ohne dass die Funktonalität der Wandlervorrichtung schlechter wird. Die Antennenvorrichtung ist außerdem in einer Art positioniert, dass eine Hauptabstrahlrichtung in eine bestimmte Ebene des Gehäuses ausgerichtet ist. Damit ist gemeint, dass beispielsweise wenn das Gehäuse des Wandlervorrichtung in eine bestimmte Position gebracht ist, die Hauptabstrahlrichtung der Antennenvorrichtung in der horizontalen Ebene liegt. Der Vorteil daran ist, dass in dieser Ebene für eine Bluetooth-und/oder WLAN-Verbindung die Sendeleistung konzentriert ist. Somit ist z.B. der Empfang mittels eines mobilen Endgeräts ermöglicht. Eine Antennencharakteristik in dieser Ebene ist vorzugsweise omnidirektional, das bedeutet die elektromagnetische Abstrahlung ist in allen Richtungen dieser Ebene gleich groß. Die Antennencharakteristik kann auch keulenförmig sein und somit bevorzugt in eine Richtung abstrahlen oder doppelkeulenförmig sein und insbesondere je eine Hauptabstrahlrichtung in je zwei gegeneinander gerichtete Richtungen der Ebene aufweisen und in diese je stärker abstrahlen als in zwei andere Richtungen der Ebene, die zu den ersten beiden Richtungen senkrecht stehen.

Eine Weiterbildung der Erfindung sieht vor, dass das Gehäuse der Wandlervorrichtung zumindest einen elektrischen Masseanschluss aufweist. Über diesen Masseanschluss sind sowohl die Bauteile der Wandlervorrichtung, als auch die Bauteile der Antennenvorrichtung geerdet. Das bedeutet, dass der Massepunkt der Antennenvorrichtung derselbe Massepunkt der Wandlervorrichtung ist. Der Vorteil daran ist, dass die Antennenvorrichtung, die im Gehäuse der Wandlervorrichtung integriert ist, keinen separaten Masseanschluss benötigt, und Bauraum einspart. Vielmehr kann ein schon vorhandener Massepunkt der Wandlervorrichtung auch von der Antennenvorrichtung genutzt werden. Dieser Massepunkt ist dabei vorzugsweise ein elektrisch leitendes Verbindungselement, das dazu ausgestaltet ist, das Gehäuse auch mechanisch an einem vorbestimmten Platz im Kraftfahrzeug zu befestigen, etwa eine Schraubhalterung.

Die Erfindung sieht auch ein Kraftfahrzeug mit einer eingebauten erfindungsgemäßen Wandlervorrichtung vor. Die Wandlervorrichtung ist dazu ausgestaltet, eine Impedanzanpassung einer Fahrzeug- und/der Rundfunkantenne des Kraftfahrzeugs bereitzustellen und/oder das Signal zu verstärken. Im Gehäuse der Wandlervorrichtung ist eine Antennenvorrichtung integriert, die eine Antennenvorrichtung der bereits vorher beschriebenen Wandlervorrichtung ist. Durch diese Integration ist im Kraftfahrzeug Bauraum eingespart, der sonst durch zumindest ein zusätzliches Gehäuse eines Bluetooth- und/oder WLAN-Moduls belegt wäre.

In einer Weiterbildung des erfindungsgemäßen Kraftfahrzeugs ist eine Einbauposition so gewählt, dass eine Hauptabstrahlrichtung, d.h. ein Abstrahlmaximum der Antennenvorrichtung in eine horizontale Ebene des Kraftfahrzeugs zeigt. Damit ist gemeint, dass die Hauptabstrahlrichtung der Antennenvorrichtung nicht in Richtung Fahrzeugdach und/oder Fahrzeugboden, sondern in eine horizontale Ebene gerichtet ist. Bevorzugt liegt diese Ebene zwischen der Höhe des Fahrersitzes und des Fahrzeugdachs. Zumindest ist der waagerechte Anteil eines Vektors der Hauptabstrahlrichtung größer als der senkrechte Anteil. Insbesondere durch Nebenabstrahlrichtlungen können jedoch auch Bereiche oberhalb des Fahrzeugdaches ausgestrahlt werden. Durch eine omnidirektionale und/oder achterförmige Strahlcharakteristik der Antennenvorrichtung ist gewährleistet, dass eine Bluetooth- und/oder WLAN-Verbindung mit Geräten, die sich innerhalb und/oder außerhalb des Kraftfahrzeugs befinden besonders gut möglich ist. Das bedeutet, dass ein Hauptteil einer abgestrahlten Energie in einen Bereich gerichtet ist, in dem sich Bluetooth-und/oder WLAN-fähige Geräte befinden, beispielsweise im Fahrzeuginnenraum und/oder in einem Fahrzeugaußenraum, in dem ein Nutzer bei Gebrauch eines solchen Gerätes neben dem Kraftfahrzeug steht. Der Vorteil, der sich daraus ergibt, die Antennenvorrichtung in das Gehäuse der Wandlervorrichtung zu integrieren liegt darin, dass dieses Gehäuse standardmäßig an Positionen angebracht ist, die eine sehr gute Signalausstrahlung in den genannten Innenraum und/oder Fahrzeugaußenraum ermöglichen.

Eine Weiterbildung des erfindungsgemäßen Kraftfahrzeugs sieht vor, dass mittels der Antennenvorrichtung in einem Bereich im und/oder um das Kraftfahrzeug ein WLAN-Hotspot bereitgestellt wird und/oder Signale eine Bildübertragung übertragen werden. Ein Steuergerät des Kraftfahrzeugs ist dazu ausgestaltet, einen solchen Betriebsmodus einzustellen. Ein WLAN-Hotspot bietet einem Nutzer des Kraftfahrzeugs den Vorteil, beispielsweise mehrere WLAN-fähige Geräte über eine einzige Internetverbindung, die das Kraftfahrzeug bereitstellt, mit dem Internet zu verbinden. Eine Bildübertragung kann in vorteilhafter Weise dazu genutzt werden, Kamerabilder über WLAN während eines Vorgangs eines pilotierten Parkens zu übertragen, sodass sie in einem Display des Kraftfahrzeugs angezeigt werden und/oder einer zentralen Servervorrichtung zugänglich sind.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Wandlervorrichtung beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: eine schematische Darstellung einer Wandlervorrichtung mit integrierter Antennenvorrichtung;
- Fig. 2: eine schematische Darstellung eines Kraftfahrzeugs mit zwei eingebauten Wandlervorrichtungen; und
- Fig. 3: eine schematische Darstellung einer elektrischen Platine mit einer integrierten Antennenvorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

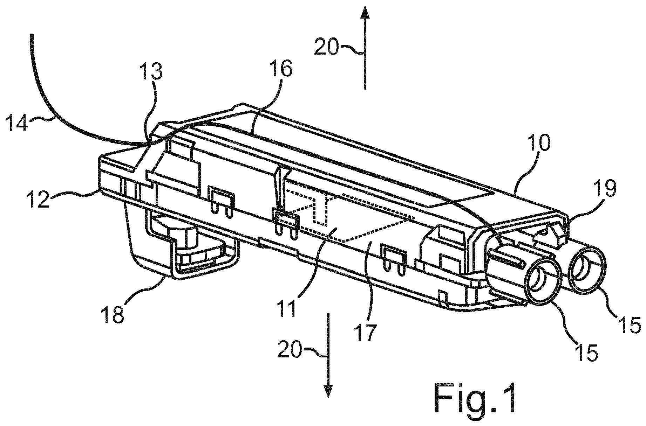

Fig. 1 zeigt eine Wandlervorrichtung 10 mit einer integrierten Antennenvorrichtung 11. Die Antennenvorrichtung 11 ist dabei in ein Gehäuse 12 der Wandlervorrichtung 10 eingebaut. Über einen elektrischen Eingang 13 der Wandlervorrichtung 10 ist eine Rundfunkantenne 14 an die Wandlervorrichtung 10 angeschlossen, und Ausgänge 15 der Wandlervorrichtung 10 sind als Koaxialsteckverbindungen ausgeführt. Der elektrische Eingang 13 und zumindest ein elektrischer Ausgang 15 sind über einen Wandlungspfad 16 miteinander verbunden. Der Wandlungspfad 16 beinhaltet dabei elektrische, hier nicht dargestellte Bauelemente, die eine Impedanzwandlung und/oder Verstärkung bewirken. Diese sind an sich aus dem Stand der Technik bekannt. In dem Gehäuse 12 ist eine elektrische Platine 17 integriert. Ein Masseanschluss 18 stellt zusätzlich zu einer Masseverbindung auch ein mechanisches Verbindungselement bereit. Die elektrischen Ausgänge 15 verfügen über ein Verklippselement 19 für eine Schnappverbindung. Eine Abstrahlcharakteristik der Antennenvorrichtung 11 weist zwei Hauptabstrahlrichtungen 20, die jeweils ein Abstrahlmaximum der Antennencharakteristik sind, auf, die jeweils senkrecht zur Antennenvorrichtung 11 in unterschiedliche Richtungen weisen.

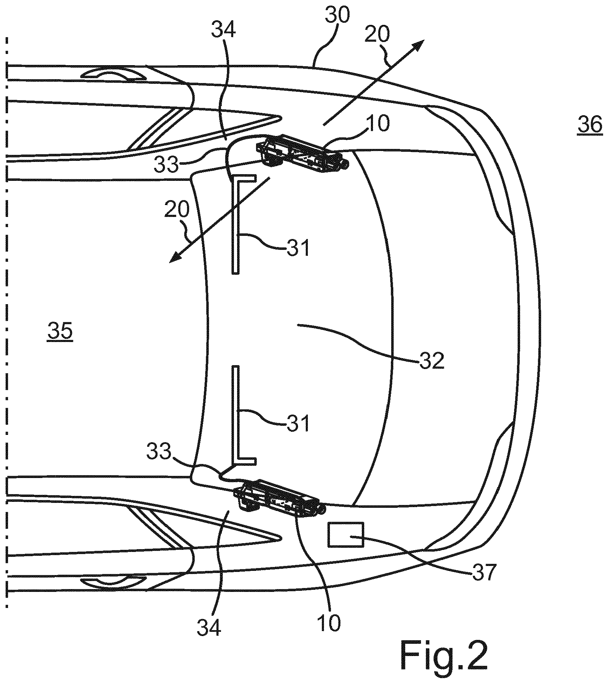

Fig. 2 zeigt ein Kraftfahrzeug 30, in das zwei Wandlervorrichtungen 10 eingebaut sind. Eine Antennenstruktur 31 ist an einer Fahrzeug Heckscheibe 32 angebracht und über eine elektrische Verbindung 33 mit je einer Wandlervorrichtung 10 elektrisch verbunden. Die Wandlervorrichtungen 10 sind je in einer C-Säule 34 des Kraftfahrzeugs 30 angebracht und so positioniert, dass je eine Hauptabstrahlrichtung 20 der Wandlervorrichtung 10 in einen Innenraum 35 des Kraftfahrzeugs 30 zeigt und in einen Außenraum 36 des Kraftfahrzeugs 30 zeigt. Die Anbringung der Wandlervorrichtungen kann auch an die A-Säule, die C-Säule oder in der Heckklappe des Kraftfahrzeugs erfolgen. Das Kraftfahrzeug 30 hat außerdem ein Steuergerät 37, mittels dessen zumindest die Bluetooth- und/oder WLAN-Verbindung gesteuert wird. In der Ausführung der Wandlervorrichtung mit integrierter Antennenvorrichtung und Transceiver erfolgt die Steuerung der Bluetooth- und/oder WLAN-Verbindung über den Transceiver selbst.

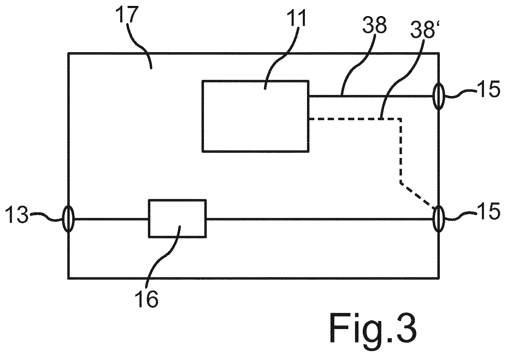

Fig. 3 zeigt die elektrische Platine 17 mit einem elektrischen Eingang 13 und zwei elektrischen Ausgängen 15. Der Wandlungspfad 16 verbindet Eingang 13 und einen Ausgang 15 und verstärkt das Signal zwischen diesen und/oder passt eine Impedanz zwischen diesen an. Eine Antennenvorrichtung 11 ist als Patchantenne zum Empfang eines WLAN-Signals ausgestaltet und über eine elektrische Verbindung 38 mit einem zweiten elektrischen Ausgang 15 verbunden. In einem anderen Ausführungsbeispiel kann die Antennenvorrichtung 11 auch über eine elektrische Verbindung 38' mit demselben elektrischen Ausgang 15 wie der Wandlungspfad 16 verbunden sein.

In einem Ausführungsbeispiel ist vorgesehen, dass die Wandlervorrichtung 10 eine Impedanz einer Rundfunkantenne 14 anpasst, sodass an einem elektrischen Ausgang 15 eine vorbestimmte Impedanz 50 Ohm beträgt. In dem Ausführungsbeispiel sind ein Signal der Rundfunkantenne 14 und ein Signal der Antennenvorrichtung 11 über einen einzigen Ausgang 15 geführt. An diesen Ausgang 15 ist ein Koaxialkabel angeschlossen, welches über ein Sicherungselement durch das Verklippselement 19 mechanisch gesichert ist, sodass es ohne ein Bedienen des Verklippselements 19 nicht vom Ausgang 15 lösbar ist. Wenn die Wandlervorrichtung 10 also in ein Kraftfahrzeug 30 eingebaut ist, kann sich das Koaxialkabel wegen des Verklippselements 19 auch bei einem Rütteln bei einem Fahren des Kraftfahrzeugs 30 nicht lösen.

In einem Ausführungsbeispiel ist eine im Gehäuse 12 integrierte Antenne der elektrischen Antennenvorrichtung 11 als planare Patchantenne ausgeführt, die auf der elektrischen Platine 17 der Wandlervorrichtung 10 angebracht ist. Diese Patchantenne ist über eine elektrische Verbindung mit einem ersten Ausgang 15 verbunden. Der Wandlungspfad 16 ist dagegen mit einem zweiten oder anderen Ausgang 15 verbunden. Somit stellt die Wandlervorrichtung dieses Ausführungsbeispiel für die externe Rundfunkantenne 14 und die Antennenvorrichtung 11 je separate Ausgänge 15 zur Verfügung. In dem Ausführungsbeispiel sind zwei Koaxialkabel in einem Koaxialsteckelement verbunden, das gemeinsam an die beiden Ausgänge 15 angeschlossen werden kann. Das gemeinsame Steckelement weist hierbei ein Gegenstück zum Verklippselement 19 auf, sodass beide Koaxialkabel durch ein einziges Verklippselement 19 mechanisch gesichert sind. In einer anderen Ausführung ist eine elektrische Antennenvorrichtung 11 für eine Bluetooth-Verbindung an einen ersten Anschluss 15, eine Antennenvorrichtung 11 für eine WLAN-Verbindung an einen zweiten Anschluss 15 und weitere Rundfunkdienste der externen Antenne an weitere Anschlüsse 15 angeschlossen.

In einem Ausführungsbeispiel ist die Wandlervorrichtung 10 in ein Kraftfahrzeug 30 eingebaut. Die integrierte Antennenvorrichtung 11 stellt dabei eine Bluetooth- und WLAN-Verbindung zur Verfügung, die in Kraftfahrzeugen für eine zunehmende Anzahl neuer Dienste wichtig sind. Da immer mehr Kraftfahrzeuge immer mehr Bluetooth- oder WLAN-Dienste benutzen, ist eine Abdeckung eines Fahrzeug-Außenraumes 36 und eines Fahrzeug-Innenraumes 35 mit einem ausreichenden Bluetooth- und WLAN-Signalpegel notwendig. Dieser wird durch die Antennenvorrichtung 11 bereitgestellt. Die Wandlervorrichtung 10 ist hierbei in einer C-Säule 34 des Kraftfahrzeugs positioniert. Es können auch zwei Wandlervorrichtungen oder mehrere Wandlervorrichtungen in das Kraftfahrzeug eingebaut sein. Dabei ist jede Wandlervorrichtung zumindest mit einer Fahrzeugantenne 31 verbunden. Im Ausführungsbeispiel ist die Fahrzeugantenne 31 in eine Heckscheibe 32 des Kraftfahrzeugs integriert. Die Fahrzeugantenne ist hier als Rundfunkantenne 14 ausgestaltet. Diese ist für den Empfang von Radiosignalen wie AM- und/oder FM-Signalen, sowie DAB-Signalen geeignet. In einem anderen Ausführungsbeispiel ist die Fahrzeugantenne 31 zum Empfang von Fernsehsignalen geeignet. Die Fahrzeugantenne 31 ist über eine elektrische Verbindung 33 mit den Wandlervorrichtungen 10 verbunden, wobei die elektrische Verbindung 33 an den elektrischen Eingang 13 der jeweiligen Wandlervorrichtung 10 angeschlossen ist. Die elektrische Verbindung 33 ist hierbei ein sogenanntes Pig Tail, wodurch eine durch ein kurzes Kabel realisierte elektrische Verbindung bezeichnet ist. In einem anderen Ausführungsbeispiel können Wandlervorrichtungen 10 ebenso in anderen Fahrzeugsäulen des Kraftfahrzeugs 30 eingebaut sein, zum Beispiel in einer A- oder in einer B-Säule. Ebenso können Wandlervorrichtungen 10 in eine Heckklappe des Kraftfahrzeugs 30 eingebaut sein. Eine Wandlervorrichtung 10 ist hierbei mit einer Karosserie des Kraftfahrzeugs 30 fest verschraubt, wobei die Verschraubung an dem Masseanschluss 18 realisiert ist, sodass die Fahrzeugkarosserie auch eine elektrische Masse für die Wandlervorrichtung 10 und die Antennenvorrichtung 11 bildet.

In einem weiteren Ausführungsbeispiel ist eine Wandlervorrichtung 10 in einer C-Säule 34 des Kraftfahrzeugs 30 so positioniert, dass zwei seiner Hauptabstrahlrichtungen 20 in entgegengesetzte Richtungen zeigen. Eine Hauptabstrahlrichtung 20 zeigt hierbei direkt in den Innenraum 35 des Kraftfahrzeugs 30. Die andere Hauptabstrahlrichtung 20 zeigt in den Außenraum 36 des Kraftfahrzeugs 30. Der Außenraum 36 ist in diesem Ausführungsbeispiel ein Außenraum in horizontaler Richtung des Kraftfahrzeugs, in dem sich ein Nutzer mit einem Bluetooth-und/oder WLAN-fähigen Gerät befindet, wenn er neben dem Kraftfahrzeug 30 steht. Das Kraftfahrzeug 30 stellt in diesem Ausführungsbeispiel mittels der Antennenvorrichtung 11 einen WLAN Hotspot zur Verfügung, den ein Nutzer im Innenraum 35 oder dem Außenraum 36 des Kraftfahrzeugs 30 nutzen kann.

Insgesamt zeigen die Beispiele, wie durch die Erfindung eine Bluetooth- und/oder WLAN-Antenne mit zugehörigen Komponenten eines Funkmoduls wie einem Vorverstärker und/oder Transceiver in das Gehäuse einer Wandlervorrichtung für Rundfunkdienste wie AM/FM/TV/DAB integriert und in ein Kraftfahrzeug eingebaut werden kann. Die integrierte Bluetooth/WLAN Antenne stellt verschiedene Dienste in dem Kraftfahrzeug zur Verfügung, zum Beispiel eine Bluetooth-Anbindung, einen-WLAN Hotspot im Kraftfahrzeug für HF-Stream oder eine Bildübertragung über WLAN während eines pilotierten Parkens. Somit ist durch die Integration die ursprüngliche Funktion der Wandlervorrichtung um die Funktionalität von Bluetooth/WLAN erweitert. Dazu ist eine Antennenstruktur mit einem Diagnosewiderstand auf einer Leiterplatte der Wandlervorrichtung integriert. Mittels einer HF Leitung auf der Leiterplatte wird das Antennensignal der integrierten Antenne von der Antennenstruktur zu einem dafür vorher gesehenen Koaxialanschluss geroutet. Vom Koaxialstecker aus wird das hochfrequente Signal über eine Koaxialleitung zu einem Steuergerät des Kraftfahrzeugs weitergeleitet. Ein Koaxialstecker kann dabei ein bestimmter, für Kraftfahrzeuge zertifizierter Stecker sein. Der Vorteil der Integration einer Bluetooth/WLAN-Funktion in eine Wandlervorrichtung besteht darin, dass die standardmäßige Einbauposition der Wandlervorrichtung in Kraftfahrzeugen an solchen Positionen ist, welche hervorragend dafür geeignet sind, durch die Antennenvorrichtung einen Innenraum und Außenraum des Kraftfahrzeugs mit einem Bluetooth/WLAN Signal auszustrahlen. Durch die Integration der Antennenvorrichtung in die Wandlervorrichtung sind auch Interoperabilität mit anderen Funkdiensten und/oder die EMV (elektromagnetische Verträglichkeit) Kompatibilität gewährleistet. Es ist vor allem vor einem Konstruktionsschritt keine weitere Suche nach Einbauorten von Bluetooth/WLAN Antennen im Kraftfahrzeug notwendig, und es werden separate Halter eingespart und damit auch separate Kosten solcher abgesetzt eingebauten Bluetooth/WLAN Antennen vermieden. Durch die Integration der Bluetooth/WLAN Funktionalität in die Wandlervorrichtung ist es auch nicht notwendig, zwei getrennte Bauteile in das Kraftfahrzeug einzubauen, der Montageaufwand reduziert sich auf den Einbau und die Verkabelung eines einzigen Bauteils. Das hat vor allem Vorteile bei einer Serienwerkzeugherstellung des tragenden Bauteils, also des Gehäuses. Insbesondere sind auch nicht immer weitere Einbauplätze in Kraftfahrzeugen vorhanden, da viele Kraftfahrzeuge bereits eine sehr hohe Packagedichte aufweisen. Durch die Integration der Bluetooth/WLAN Funktionalität kann insbesondere eine separate Bluetooth oder WLAN Antenne durch eine günstigere Antennenstruktur auf der Platine der Wandlervorrichtung ersetzt werden. Bei der Montage eines einzelnen Bauteils mit zwei verschiedenen Funktionen entfällt eine Montage eines zusätzlichen Bauteils, wodurch sich Fertigungszeiten verringern. Einheitliche Bluetooth/WLAN Konzepte für Kraftfahrzeuge können durch die Integration der Antennenvorrichtung in die Wandlervorrichtung realisiert werden, wodurch auch eine Leitungsvarianz in verschiedenen Kraftfahrzeugmodellen minimiert werden kann. Bei der Wandlervorrichtung handelt es sich in einem Ausführungsbeispiel um ein Normgehäuse für den Einbau in Kraftfahrzeuge, das eine aktive Signalführung zwischen dem elektrischen Eingang und dem elektrischen Wandlerausgang bereitstellt, d.h. neben einer Impedanzwandlung auch eine Signalverstärkung durchführt. Zum Beispiel kann ein AM-Signal nur impedanzmäßig angepasst werden und ein anderes Signal zugleich impedanzmäßig angepasst und verstärkt werden. Ein Signal kann auch ausschließlich verstärkt werden.

Insgesamt ist durch das Beispiel gezeigt, wie durch die Erfindung ein Integrationsprinzip von Bluetooth/WLAN-Antennen in eine Wandlervorrichtung für Rundfunkdienste AM/FM/TV/DAB bereitgestellt werden kann.

## Patentansprüche

1. Wandlervorrichtung (10), die ein in ein Kraftfahrzeug (30) einbaubares Gehäuse (12) aufweist, in welchem zumindest ein Wandlungspfad (16) zwischen zumindest einem elektrischen Eingang (13) und zumindest einem elektrischen Wandlerausgang (15) des Gehäuses (12) bereitgestellt ist, wobei die Wandlervorrichtung (10) ausgestaltet ist, über den zumindest einen Wandlungspfad (16) eine Impedanz zumindest einer außerhalb des Gehäuses (12) positionierten und an den zumindest einen Eingang (13) angeschlossenen externen Antenne (14), insbesondere einer Rundfunkantenne (14), an eine Impedanz zumindest einer weiteren, an den zumindest einen Wandlerausgang (15) anschließbaren elektrischen Vorrichtung anzupassen, sodass an dem zumindest einen elektrischen Wandlerausgang (15) eine vorbestimmte Impedanz bereitgestellt ist, wobei
zumindest eine vom Wandlungspfad (16) unabhängige Antennenvorrichtung (11) in das Gehäuse (12) der Wandlervorrichtung (10) integriert ist, die zumindest einen Teil von Komponenten für eine Bluetooth- und/oder WLAN-Verbindung zu zumindest einem Bluetooth- und/oder WLAN-fähigen Gerät bereitstellt, und zumindest ein mit der Antennenvorrichtung (11) elektrisch verbundener Antennenvorrichtungsanschluss (15) am Gehäuse (12) der Wandlervorrichtung (10) als elektrischer Ausgang (15) und/oder elektrischer Eingang der Antennenvorrichtung (11) bereitgestellt ist,
**dadurch gekennzeichnet, dass** - d
er zumindest eine Wandlerausgang (15) und der zumindest eine Antennenvorrichtungsanschluss (15) in einem gemeinsamen Steckverbindungselement ausgeführt sind, wobei das Steckverbindungselement einen elektrisch leitfähigen Pin zum Anschließen eines elektrischen Kabels aufweist und wobei mit diesem einen elektrischen Pin sowohl der Wandlungspfad (16) als auch die Antennenvorrichtung (11) elektrisch verbunden sind.

2. Wandlervorrichtung (10) nach Anspruch 1, **dadurch gekennzeichnet, dass** der zumindest eine Wandlerausgang (15) und der zumindest eine Antennenvorrichtungsanschluss (15) als gemeinsames Koaxialverbindungselement ausgeführt sind, das insbesondere zumindest ein mechanisches Sicherungselement (19) zum Sichern eines anschließbaren Verbindungselementes aufweist.

3. Wandlervorrichtung (10) nach einem der vorhergehenden Ansprüche, **dadurch gekennzeichnet, dass** als eine der Komponenten der Antennenvorrichtung (11) eine elektrisch leitfähige Struktur einer Antenne bereitgestellt ist, die insbesondere eine planare Struktur ist, welche auf einem Trägersubstrat (17) der Wandlervorrichtung (10) angebracht ist.

4. Wandlervorrichtung (10) nach einem der vorhergehenden Ansprüche, **dadurch gekennzeichnet, dass** ein Vorverstärker und/oder Transceiver der Antennenvorrichtung (11) jeweils mit im Gehäuse (12) integriert ist und jeweils mit dem Antennenvorrichtungsanschluss (15) verschaltet ist.

5. Wandlervorrichtung (10) nach einem der vorhergehenden Ansprüche, **dadurch gekennzeichnet, dass** die Antennenvorrichtung (11) im Gehäuse (12) der Wandlervorrichtung (10) derart positioniert ist, dass der Wandlungspfad (16) elektrisch von der Antennenvorrichtung (11) unbeeinflusst ist und eine elektromagnetische Abstrahlung der Antennenvorrichtung (11) in einer ersten Ebene des Gehäuses größer ist, als in einer anderen Ebene, und in der ersten Ebene eine Abstrahlcharakteristik insbesondere omnidirektional und/oder keulenförmig oder doppelkeulenförmig ist.

6. Wandlervorrichtung (10) nach einem der vorhergehenden Ansprüche, **dadurch gekennzeichnet, dass** der Wandlungspfad (16) einen Masseanschluss (18) aufweist, der mit einer Fahrzeugkarosserie verbindbar ist, wobei der Masseanschluss (18) des Wandlungspfads (16) auch den Masseanschluss (18) der Antennenvorrichtung (11) bildet.

7. Kraftfahrzeug (30) mit einer Wandlervorrichtung (10) zur Impedanzanpassung einer Fahrzeugantenne (31), **dadurch gekennzeichnet, dass** das Kraftfahrzeug (30) eine Wandlervorrichtung (10) mit integrierter Antennenvorrichtung (11) nach einem der vorhergehenden Ansprüche aufweist.

8. Kraftfahrzeug (30) nach Anspruch 7, **dadurch gekennzeichnet, dass** eine Einbauposition der Wandlervorrichtung (10) derart gewählt ist, dass zumindest ein Abstrahlmaximum der Antennenvorrichtung (11) in einen Innenraum (35) des Kraftfahrzeugs (30) und/oder zumindest ein Abstrahlmaximum der Antennenvorrichtung (11) in einen außengelegenen horizontalen Umgebungsbereich des Kraftfahrzeugs (30) gerichtet ist.

9. Kraftfahrzeug (30) nach Anspruch 7 oder 8, **dadurch gekennzeichnet, dass** das Kraftfahrzeug (30) mittels der Antennenvorrichtung (11) dazu ausgestaltet ist, in zumindest einem jeweiligen Betriebsmodus mittels eines Steuergerätes (37) einen WLAN-Hotspot bereitzustellen und/oder Signale einer Bildübertragung zu übertragen.

## Claims

1. Converter device (10), which has a housing (12) which can be installed into a motor vehicle (30), in which at least one converter path (16) is provided between at least one electric input (13) and at least one electric converter output (15) of the housing (12), wherein the converter device (10) is configured, via the at least one converter path (16) to adjust an impedance at least of an external antenna (14) positioned outside the housing (12) and connected to the at least one input (13), in particular a radio antenna (14), to an impedance at least of an additional electric device connectable to the at least one converter output (15) so that a prespecified impedance is provided at the at least one electric converter output (15), wherein
at least one antenna device (11) independent of the converter path (16) is integrated into the housing (12) of the converter device (10) which provides at least a portion of components for a Bluetooth and/or WLAN connection to at least one Bluetooth and/or WLAN-enabled device, and at least one antenna device connector (15) connected electrically to the antenna device (11) is provided on the housing (12) of the converter device (10) as an electric output (15) and/or electric input of the antenna device (11), **characterised in that**
the at least one converter output (15) and the at least one antenna device connector (15) are formed in a common plug-in connector element, wherein the plug-in connector element has an electrically conductive pin for connecting an electric cable and wherein by means of said one electric pin both the converter path (16) and also the antenna device (11) are connected electrically.

2. Converter device (10) according to claim 1, **characterised in that** the at least one converter output (15) and the at least one antenna device connector (15) are designed as a common coaxial connecting element, which has in particular at least one mechanical safety element (19) for securing a connectable connecting element.

3. Converter device (10) according to any of the preceding claims, **characterised in that** as one of the components of the antenna device (11) an electroconductive structure of an antenna is provided which in particular is a planar structure which is attached onto a substrate (17) of the converter device (10).

4. Converter device (10) according to any of the preceding claims, **characterised in that** a preamplifier and/or transceiver of the antenna device (11) is integrated respectively into the housing (12) and is connected respectively to the antenna device connector (15).

5. Converter device (10) according to any of the preceding claims, **characterised in that** the antenna device (11) is positioned in the housing (12) of the converter device (10) such that the converter path (16) is unaffected electrically by the antenna device (11) and an electromagnetic radiation of the antenna device (11) is greater in a first plane of the housing than in another plane, and in the first plane a radiation characteristic is in particular omnidirectional and/or club-shaped or double club-shaped.

6. Converter device (10) according to any of the preceding claims, **characterised in that** the converting path (16) has a ground connection (18) which is connectable to a vehicle chassis, wherein the ground connection (18) of the converting path (16) also forms the ground connection (18) of the antenna device (11).

7. Motor vehicle (30) with a converter device (10) for the impedance adjustment of a vehicle antenna (31), **characterised in that** the motor vehicle (30) has a converter device (10) with integrated antenna device (11) according to any of the preceding claims.

8. Motor vehicle (30) according to claim 7, **characterised in that** an installation position of the converter device (10) is selected such that at least one radiation maximum of the antenna device (11) is directed into an inner space (35) of the motor vehicle (30) and/or at least one radiation maximum of the antenna device (11) into an outer horizontal surrounding area of the motor vehicle (30).

9. Motor vehicle (30) according to claim 7 or 8, **characterised in that** the motor vehicle (30) is configured by means of the antenna device (11), in at least one respective operating mode, to provide by means of a control device (37) a WLAN hotspot and/or transmit signals of an image transmission.

## Revendications

1. Dispositif convertisseur (10), qui présente un boîtier (12), pouvant être monté dans un véhicule à moteur (30), dans lequel au moins un trajet de conversion (16) est fourni entre au moins une entrée électrique (13) et au moins une sortie de convertisseur électrique (15) du boîtier (12), dans lequel le dispositif convertisseur (10) est conçu pour adapter une impédance d'au moins une antenne externe (14) positionnée à l'extérieur du boîtier (12) et raccordée à l'au moins une entrée (13), en particulier d'une antenne de radiodiffusion (14), à une impédance d'au moins un autre dispositif électrique pouvant être raccordé à l'au moins une sortie de convertisseur (15), par l'intermédiaire de l'au moins un trajet de conversion (16), de sorte qu'une impédance prédéfinie est fournie sur l'au moins une sortie de convertisseur électrique (15), dans lequel
au moins un dispositif d'antenne (11) indépendant du trajet de conversion (16) est intégré dans le boîtier (12) du dispositif convertisseur (10), qui fournit au moins une partie de composants pour une liaison Bluetooth et/ou WLAN à au moins un appareil compatible Bluetooth et/ou WLAN, et au moins un raccordement de dispositif d'antenne (15) relié électriquement au dispositif d'antenne (11) sur le boîtier (12) du dispositif convertisseur (10) est fourni en tant que sortie électrique (15) et/ou entrée électrique du dispositif d'antenne (11),
**caractérisé en ce que**
l'au moins une sortie de convertisseur (15) et l'au moins un raccord de dispositif d'antenne (15) sont réalisés dans un élément de connexion commun, dans lequel l'élément de connexion présente une broche électroconductrice pour le raccordement d'un câble électrique et dans lequel aussi bien le trajet de conversion (16) que le dispositif d'antenne (11) sont reliés électriquement à l'une de ces broches électriques.

2. Dispositif convertisseur (10) selon la revendication 1, **caractérisé en ce que** l'au moins une sortie de convertisseur (15) et l'au moins un raccord de dispositif d'antenne (15) sont réalisés en tant qu'élément de liaison coaxiale commun, qui présente en particulier au moins un élément de blocage mécanique (19) destiné à bloquer un élément de liaison pouvant être raccordé.

3. Dispositif convertisseur (10) selon l'une quelconque des revendications précédentes, **caractérisé en ce qu'**une structure électroconductrice d'une antenne est fournie en tant qu'un des composants du dispositif d'antenne (11), qui est en particulier une structure planaire, laquelle est montée sur un substrat de support (17) du dispositif convertisseur (10).

4. Dispositif convertisseur (10) selon l'une quelconque des revendications précédentes, **caractérisé en ce qu'**un préamplificateur et/ou émetteur-récepteur du dispositif d'antenne (11) est intégré respectivement dans le boîtier (12) et branché respectivement avec le raccord de dispositif d'antenne (15).

5. Dispositif convertisseur (10) selon l'une quelconque des revendications précédentes, **caractérisé en ce que** le dispositif d'antenne (11) est positionné dans le boîtier (12) du dispositif convertisseur (10), de telle sorte que le trajet de conversion (16) n'est pas influencé électriquement par le dispositif d'antenne (11) et un rayonnement électromagnétique du dispositif d'antenne (11) est plus grand dans un premier plan du boîtier que dans un autre plan, et, dans le premier plan, une caractéristique de rayonnement est en particulier omnidirectionnelle et/ou lobée ou doublement lobée.

6. Dispositif convertisseur (10) selon l'une quelconque des revendications précédentes, **caractérisé en ce que** le trajet de conversion (16) présente une mise à la masse (18), qui peut être reliée à une carrosserie de véhicule, dans lequel la mise à la masse (18) du trajet de conversion (16) forme également la mise à la masse (18) du dispositif d'antenne (11).

7. Véhicule à moteur (30) avec un dispositif convertisseur (10) pour l'adaptation de l'impédance d'une antenne de véhicule (31), **caractérisé en ce que** le véhicule à moteur (30) présente un dispositif convertisseur (10) avec dispositif d'antenne (11) intégré selon l'une quelconque des revendications précédentes.

8. Véhicule à moteur (30) selon la revendication 7, **caractérisé en ce qu'**une position de montage du dispositif convertisseur (10) est sélectionnée de telle sorte qu'au moins un maximum de rayonnement du dispositif d'antenne (11) est dirigé dans un espace intérieur (35) du véhicule à moteur (30) et/ou au moins un maximum de rayonnement du dispositif d'antenne (11) dans une zone d'environnement horizontale, située à l'extérieur, du véhicule à moteur (30).

9. Véhicule à moteur (30) selon la revendication 7 ou 8, **caractérisé en ce que** le véhicule à moteur (30) est conçu, au moyen du dispositif d'antenne (11), pour fournir une borne WIFI WLAN et/ou transmettre des signaux d'une transmission d'image dans au moins un mode de fonctionnement respectif au moyen d'un appareil de commande (37).
